# EUROPÄISCHE PATENTSCHRIFT

(11) **EP 0 562 149 B1**
(45) Veröffentlichungstag und Bekanntmachung des Hinweises auf die Patenterteilung: **31.05.1995**
(21) Anmeldenummer: 92105351.8
(22) Anmeldetag: 27.03.1992
(51) Int. Cl.: B23K 26/08, B41C 1/14

(54) **Vorrichtung zum Bearbeiten dünnwandiger Hohlzylinder mittels eines Laserstrahls**
Apparatus for laser machining a hollow cylinder having a thin wall
Appareil d'usinage d'un cylindre creuse à paroi mince par un laser

(43) Veröffentlichungstag der Anmeldung: 29.09.1993
(73) Patentinhaber: Schablonentechnik Kufstein Aktiengesellschaft, 6330 Kufstein (AT)
(72) Erfinder: Rückl, Siegfried, A-6322 Langkampfen (AT)
(74) Vertreter: TER MEER STEINMEISTER & PARTNER GbR

(56) Entgegenhaltungen:
- EP-A- 0 320 137
- EP-A- 0 338 816
- US-A- 4 644 129
- US-A- 4 808 790
- US-A- 5 079 401

## Beschreibung

Die Erfindung betrifft eine Vorrichtung gemäß dem Oberbegriff des Patentanspruchs 1. Eine derartige Vorrichtung ist bereits aus der US-A-5 079 401 bekannt. Es handelt sich hier um eine Vorrichtung zum Bearbeiten der Oberfläche eines dünnwandigen und zur Herstellung einer Siebdruckschablone dienenden Hohlzylinders mit Hilfe eines wenigstens annähernd radial auf den Hohlzylinder auftreffenden und in dessen Längsrichtung bewegbaren Laserstrahls. Dabei ist eine mit dem Laserstrahl mitbewegbare Stützlagerung vorhanden, die den Hohlzylinder zu seiner Abstützung in Umfangsrichtung umgibt, in dieser Richtung stationär angeordnet ist und eine Aussparung aufweist.

Bei der Herstellung einer Rundschablone geht man üblicherweise von einem metallischen Hohlzylinder aus, der an seiner äußeren Oberfläche mit einem organischen Lack dünn beschichtet ist und eine sehr geringe Wandstärke aufweist. Der metallische Hohlzylinder besitzt eine Vielzahl von kleinen und sehr eng benachbart zueinander liegenden Durchgangsöffnungen, die durch den organischen Lack dicht verschlossen werden. Zur Erzeugung eines Musterbilds wird der metallische Hohlzylinder in einer Vorrichtung, die einer Drehbank ähnlich ist, mit beiden Enden eingespannt und genau rundlaufend mitgenommen. Ein parallel zur Längsachse des Hohlzylinders herangeführter Laserstrahl wird durch einen achsparallel bewegbaren Ablenkspiegel so umgelenkt, daß er dann senkrecht zur Mantelfläche des Hohlzylinders verläuft. Dieser Laserstrahl wird mit Hilfe einer Linsenanordnung so fokussiert, daß ein Fokuspunkt sehr kleinen Durchmessers genau auf der Zylindermantelfläche zu liegen kommt. Wird der Laserstrahl gepulst, so läßt sich der organische Lack entsprechend einem vorgegebenen Musterbild von der Mantelfläche des Hohlzylinders durch Verdampfen abtragen, wobei einerseits der Laserstrahl in Axialrichtung des Hohlzylinders geführt und der Hohlzylinder selbst gedreht wird. In den abgetragenen Lackbereichen liegen dann die Durchgangsöffnungen im Hohlzylinder frei, so daß sich durch sie in einem späteren Stadium viskose Mittel, z. B. eine Druckpaste, hindurchpressen lassen.

Beim Übertragen des elektronischen Musterbilds auf die Oberfläche des Hohlzylinders muß dessen dünne Zylinderwand ausreichend genau rundlaufen, weil sonstjeder Lauffehler auch eine Fehllage der Gravur, also des zu erzeugenden Musterbilds, verursacht.

Zur Erzielung eines genauen Rundlaufs wurde bisher der Hohlzylinder auf einen genau rundlaufenden Dorn aufgeschoben. Dies hat jedoch den Nachteil, daß in Achsrichtung der Vorrichtung ein Handhabungsraum in der Größe des Hohlzylinders bzw. in Größe der Schablonenlänge freibleiben muß. Darüber hinaus ist es bei einem Wechsel des Durchmessers der Rundschablonen erforderlich, den rundlaufenden Dorn gegen einen solchen mit einem anderen Durchmesser auszutauschen, was wegen der Größe und des Gewichts dieser Teile eine erhebliche Erschwernis bei der Umrüstarbeit darstellt.

Es ist andererseits bereits bekannt, auf den zu bearbeitenden bzw. zu gravierenden Hohlzylinder einen Ring aufzuschieben, dessen Innendurchmesser nur um wenige zehntel Millimeter größer ist als der Außendurchmesser des Hohlzylinders. Infolge von Reibschlüssen wird der Ring vom Hohlzylinder mitgenommen und läuft mit diesem um. Der Ring wird mit dem Linsensystem, welches den Laserstrahl fokussiert, mitgeführt, so daß er sich zunächst am linken Ende des Hohlzylinders befindet und dann langsam mit dem Linsensystem zum anderen bzw. rechten Ende des Hohlzylinders bewegt wird. Von Nachteil ist hierbei, daß der Laserstrahl seitlich am Ring vorbeiläuft. Infolge der sehr dünnen Wandung des Hohlzylinders wird dieser im Bereich des Laserstrahls daher nicht mehr genügend gedämpft, so daß Schwingungen in diesem Bereich, insbesondere Membranschwingungen. noch zu beträchtlichen Fehlern bei der Gravur des Hohlzylinders mit Hilfe des Laserstrahls führen können (EP-A-0320137)

Der Erfindung liegt die Aufgabe zugrunde, die gattungsgemäße Vorrichtung so weiterzubilden, daß eine noch bessere Schwingungsdämpfung durchgeführt werden kann.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Vorrichtung nach der Erfindung zeichnet sich dadurch aus, daß die Stützlagerung relativ zum laserstrahl so positioniert ist, daß dieser durch die Aussparung hindurch auf den Hohlzylinder auftrifft.

Durch die erfindungsgemäße Anordnung wird erreicht, daß der Laserstrahl unmittelbar im Bereich der Stützlagerung auf die Oberfläche des Hohlzylinders auftrifft, wobei in diesem Bereich die größte Schwingungsdämpfung erhalten wird. Mit anderen Worten trifft der Laserstrahl in einem Schwingungsknotenbereich auf den Hohlzylinder auf, so daß eine einwandfreie Gravur des Hohlzylinders mit Hilfe des Laserstrahls gewährleistet ist.

Die in Umfangsrichtung des Hohlzylinders stationäre Anordnung der Stützlagerung bedeutet, daß sich die Stützlagerung nicht um die Hohlzylinderachse dreht bzw. um den Hohlzylinder herumbewegt. Vielmehr wird die Stützlagerung nur in Längs- bzw. Axialrichtung des Hohlzylinders verschoben. Da sich die Lage des Hohlzylinders innerhalb der Stützlagerung relativ schnell stabilisiert, tritt praktisch keine Beschädigung der Oberfläche des Hohlzylinders bei dessen Rotation auf.

Die Aussparung der Stützlagerung kann in unterschiedlicher Weise erzeugt werden. Bei ihr kann es sich z. B. um eine radial verlaufende Bohrung in einer ringförmig ausgebildeten Stützlagerung handeln, wobei der Laserstrahl durch diese radiale Bohrung hindurchtritt. Die Aussparung kann aber auch eine andere geeignete Form aufweisen, wobei nur wesentlich ist, daß sie den Laserstrahl in Radialrichtung des Hohlzylinders auf dessen Oberfläche auftreffen läßt.

Nach einer vorteilhaften Ausgestaltung der Erfindung kann die Stützlagerung den Hohlzylinder ring- oder teilringartig umgeben. Ist die Stützlagerung als Ring ausgebildet, so weist dieser vorzugsweise eine radiale Durchgangsöffnung für den Laserstrahl auf, die in Breiten- bzw. Axialrichtung des Rings mittig liegt. Dadurch trifft der Laserstrahl in einem Bereich auf die Oberfläche des Hohlzylinders auf, der beidseitig zum Laserstrahl in gleicher Weise gedämpft wird. Bei teilringartig ausgebildeter Stützlagerung kann die Aussparung z. B. zwischen den in Umfangsrichtung einander gegenüberliegenden Stirnflächen zweier Teilringe zu liegen kommen. Selbstverständlich kann auch in einem der Teilringe eine entsprechende Ausnehmung bzw. Durchgangsöffnung für den Laserstrahl vorhanden sein.

Die teilringartige Ausbildung der Stützlagerung hat den Vorteil, daß diese in Form zweier zueinander verschwenkbarer Lagerbügel ausgebildet werden kann. Wird einer der Lagerbügel aus seiner Betriebsposition herausgeschwenkt, so läßt sich ein Hohlzylinder leicht in die Stützlagerung einsetzen, bzw. aus dieser wieder herausnehmen. Hierdurch wird die Herstellung der Rundschablone ganz erheblich vereinfacht.

Nach einer sehr vorteilhaften Weiterbildung der Erfindung ist die Stützlagerung wenigstens zum Teil hohlträgerartig und mit zum Hohlzylinder offener Seite ausgebildet sowie mit einer Saugeinrichtung verbunden.

Die Stützlagerung, ring- oder teilringartig ausgebildet, kann dann den Hohlzylinder in bestimmten Bereichen ansaugen. wodurch sich Schwingungen seiner Mantelfläche noch weiter dämpfen lassen. Es hat sich herausgestellt, daß auch in diesem Fall keine ernsthafte Beschädigung der Oberfläche des Hohlzylinders bzw. der auf ihm liegenden Lackschicht zu befürchten ist.

Die Querschnittsform der hohlträgerartig ausgebildeten Stützlagerung, gesehen in einer senkrecht zur Umfangsrichtung liegenden Ebene, kann dabei beliebig ausgebildet sein. Wichtig ist nur, daß die Stützlagerung innen hohl und zum Hohlzylinder hin offen ist, um diesen anzusaugen. wenn in ihrem Innern ein Unterdruck erzeugt wird.

Vorzugsweise sind Wangen der Stützlagerung zur Bildung eines schmalen Spalts zwischen ihren Stirnseiten und dem Hohlzylinder bis nahe an dessen Mantelfläche herangeführt. Der Abstand zwischen den Stirnseiten der Wangen und der Oberfläche des Hohlzylinders beträgt vorzugsweise nur wenige zehntel Millimeter, um eine große Saugwirkung zu erzielen.

In Weiterbildung der Erfindung kann die Stützlagerung eine Mehrzahl von Rotationskörpern aufweisen, an denen sich die Oberfläche des Hohlzylinders abrollt. wobei der Laserstrahl im Bereich zwischen den Rotationskörpern in Richtung zum Hohlzylinder verläuft. Die Rotationskörper verhindern ein Anschlagen des Hohlzylinders gegen feststehende Teile, was insbesondere dann von Vorteil ist, wenn sich relativ weiche und damit äußerst empfindliche Lackschichten auf der Oberfläche des Hohlzylinders befinden oder infolge eines sehr kleinen Rasters absolut keine Störungen der Lackschicht auf der Oberfläche des Hohlzylinders mehr zu tolerieren sind.

Andererseits liegen sämtliche in Umfangsrichtung des Hohlzylinders angeordnete Rotationskörper permanent an diesem an, was zu einer noch besseren Schwingungsdämpfung führt.

Auch im Falle der Rotationskörper kann zusätzlich ein Unterdruck erzeugt werden, um dann den Hohlzylinder gegen die Rotationskörper zu ziehen, um die Laufruhe des Hohlzylinders weiter zu verbessern.

Nach einer sehr vorteilhaften Weiterbildung der Erfindung sind die Rotationskörper so ausgerichtet, daß sie in den Hohlzylinder eine Kraftkomponente sowohl in dessen Tangentialrichtung als auch eine Kraftkomponente in dessen Axialrichtung übertragen.

Es hat sich gezeigt, daß sich auch durch die in Axialrichtung übertragene Kraftkomponente das Schwingungsverhalten des Hohlzylinders günstig beeinflussen läßt, und zwar in Richtung auf noch kleinere Schwingungsamplituden, so daß durch diese Maßnahme noch präzisere Musterbilder hergestellt werden können.

Die Rotationskörper können z. B. Konusrollen oder Zylinderrollen sein. Um in diesem Fall Kraftkomponenten in Axialrichtung des Hohlzylinders übertragen zu können, sind die Rotationsachsen der Rotationskörper gegenüber einer Ebene, in der die Zylinderachse des Hohlzylinders verläuft, geneigt.

Nach einer vorteilhaften anderen Weiterbildung der Erfindung weisen die Rotationskörper eine konkave Kontur auf, um für eine noch größere Anlage an den Hohlzylinder und damit für eine Einleitung größerer Dämpfungskräfte zu sorgen, wenn die Rotationsachsen der Rotationskörper gegenüber der genannten Ebene geneigt sind. Mit anderen Worten umgreifen die Rotationskörper jeweils einen Teil des Umfangs des Hohlzylinders, wozu ihr Konturverlauf an den Umfangsverlauf des Hohlzylinders angepaßt ist.

Um einen noch ruhigeren Lauf des Hohlzylinders in der Stützlagerung zu erzielen, können die Rotationskörper auch als Permanentmagnete ausgebildet sein, um einen Magnetfluß durch den Hohlzylinder hindurchzuleiten und ihn damit gegen die Rotationsrollen zu ziehen. Anstelle der Rotationsrollen lassen sich aber auch die Lagerbügel mit Permanentmagneten versehen. Der Magnetfluß kann dann z.B. über Polschuhe. die mit den Lagerbügeln verbunden sind, durch den Hohlzylinder hindurchgeleitet werden, um diesen gegen die Stützrollen zu ziehen, die magnetisch oder unmagnetisch sein können. Auch hierdurch wird ein noch ruhigerer Lauf des Hohlzylinders in der Stützlagerung erzielt.

Die Stützlagerung erstreckt sich vorzugsweise über den gesamten Umfang des Hohlzylinders, mit Ausnahme des Bereichs für den Laserstrahl. Auf diese Weise wird erreicht, daß Lagerkräfte möglichst gleichmäßig über den Umfang des Hohlzylinders verteilt auf diesen einwirken und damit eine besonders ruhige Lagerung erzielt wird.

Selbstverständlich ist es auch möglich, die Rotationskörper an ihrem Umfangsbereich mit einem elastischen Überzug zu versehen, um durch sie eine Beschädigung der Oberfläche des Hohlzylinders zu vermeiden.

Wie bereits erwähnt, gibt die Stützlagerung einen Bereich der Oberfläche des Hohlzylinders frei, wozu sie mit einer Aussparung versehen ist. Diese Aussparung kann z. B. durch einen Raum zwischen zwei in Umfangsrichtung benachbarten Rotationskörpern gebildet sein. Durch diese Aussparung läuft dann der Laserstrahl hindurch, und zwar in Radialrichtung des Hohlzylinders.

Sowohl die Ablenk- und Fokussierungsoptik für den Laserstrahl als auch die Stützlagerung können auf einem gemeinsamen Schlitten montiert sein, der in Axialrichtung des Hohlzylinders verschiebbar ist. Dabei ist es nach einer weiteren vorteilhaften Ausgestaltung der Erfindung möglich, die Ablenk- und Fokussierungsoptik schwingungsmäßig gegenüber dem Schlitten bzw. der Stützlagerung zu entkoppeln, und zwar durch ein mechanisches Dämpfungselement, beispielsweise durch eine elastische Unterlage, um eine Übertragung von Schwingungen der Stützlagerung auf die Ablenk- und Fokussierungsoptik zu vermeiden.

Die Ablenk- und Fokussierungsoptik kann z. B. auf einem Querschlitten ruhen, der seinerseits auf dem genannten Schlitten montiert ist, und zwar gegebenenfalls über die elastische Unterlage.

Die erfindungsgemäße Vorrichtung weist eine Bedienungsseite auf, von der aus der Hohlzylinder in die Vorrichtung eingesetzt wird. Weist die Aussparung der Stützlagerung zur Bedienungsseite, kann also ein oberer Lagerbügel nach hinten und von der Bedienungsseite weggeschwenkt werden, so läßt sich der Hohlzylinder besonders bequem und ohne Umkehr der Bewegungsrichtung in die Stützlagerung einlegen. In diesem Fall liegt aber auch der Schlitten für den Umlenkspiegel und die Fokussierungsoptik an der Bedienungsseite, wodurch sich die Bestückung der Vorrichtung mit dem Hohlzylinder und die Entnahme des Hohlzylinders wiederum erschweren. Er muß über den Umlenkspiegel und die Fokussierungsoptik gehoben werden, was die Gefahr einer Beschädigung dieser Bauelemente mit sich bringt.

Erfindungsgemäß kann daher die Stützlagerung auch so ausgebildet sein, daß sie eine Aussparung für den Laserstrahl aufweist, die von der Bedienungsseite wegweist. Auch jetzt kann ein oberer Lagerbügel der Stützlagerung von der Bedienungsseite weg nach hinten geklappt werden, um den Hohlzylinder in die Stützlagerung einlegen zu können. Der Schlitten mit dem Umlenkspiegel und die Fokussierungsoptik befinden sich jetzt jedoch an der hinteren Seite der Vorrichtung, also nicht mehr an der Bedienungsseite, so daß sie einer Aufrüstung der Vorrichtung mit dem Hohlzylinder nicht mehr im Wege stehen. Der Leistungslaser zur Erzeugung des Laserstrahls, der z. B. gepulst werden kann, befindet sich immer an der Rückseite der erfindungsgemäßen Vorrichtung.

Ausführungsbeispiele der Erfindung werden nachfolgend unter Bezugnahme auf die Zeichnung näher beschrieben. Es zeigen:
**Fig. 1** eine perspektivische Gesamtansicht der Vorrichtung mit einem an der Bedienungsseite der Vorrichtung verlaufenden Laserstrahl,
**Fig. 2** eine perspektivische Gesamtansicht der Vorrichtung mit einem an der Rückseite der Vorrichtung verlaufenden Laserstrahl,
**Fig. 3** eine Stirnansicht einer Stützlagerung nach einem ersten Ausführungsbeispiel.
**Fig. 4** eine Seitenansicht der Stützlagerung nach Fig. 3,
**Fig. 5** eine Stirnansicht einer Stützlagerung nach einem zweiten Ausführungsbeispiel,
**Fig. 6** eine Seitenansicht der Stützlagerung nach Fig. 5,
**Fig. 7** eine Stirnansicht einer Stützlagerung nach einem dritten Ausführungsbeispiel,
**Fig. 8** eine Seitenansicht der Stützlagerung nach Fig. 7,
**Fig. 9** eine Stirnansicht einer Stützlagerung nach einem vierten Ausführungsbeispiel,.
**Fig. 10** eine Seitenansicht der Stützlagerung nach Fig. 9,
**Fig. 11** eine Stirnansicht einer Stützlagerung nach einem fünften Ausführungsbeispiel, und
**Fig. 12** eine Seitenansicht der Stützlagerung nach Fig. 11.

Die Erfindung wird nachfolgend anhand der Zeichnungen im einzelnen beschrieben.

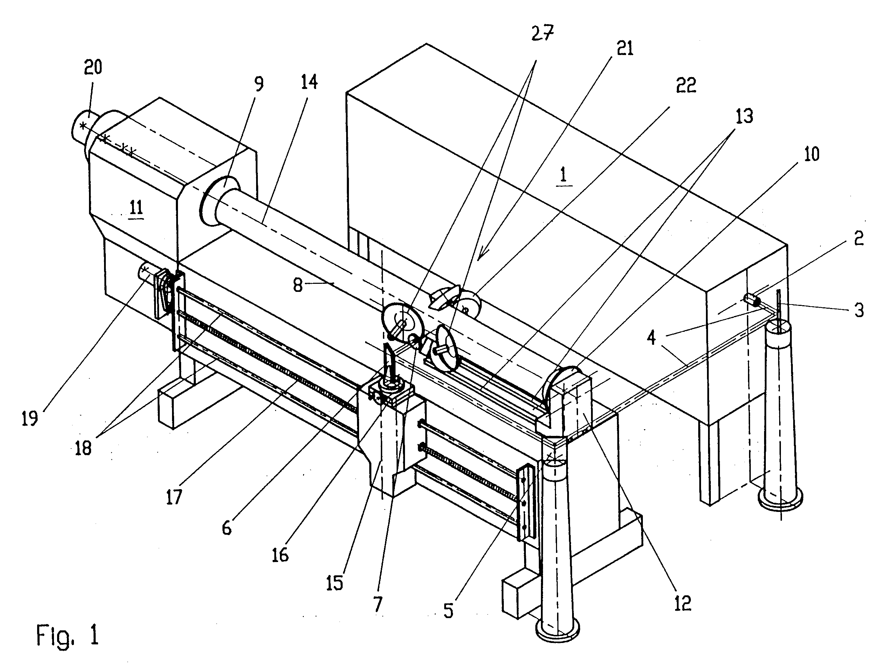

Die Fig. 1 zeigt eine erfindungsgemäße Vorrichtung mit einem Leistungslaser 1, der über eine Austrittsöffnung 2 einen auf einen ersten Ablenkspiegel 3 auftreffenden Laserstrahl 4 ausgibt. Durch den ersten Ablenkspiegel 3 wird der Laserstrahl 4 um 90 Grad umgelenkt und trifft auf einen zweiten Ablenkspiegel 5 auf, um erneut um 90 Grad umgelenkt zu werden, so daß erjetzt in einer zu seiner ursprünglichen Richtung entgegengesetzten Richtung verläuft. Über einen dritten Ablenkspiegel 6 erfolgt nochmals eine Ablenkung des Laserstrahls 4 um 90 Grad, und zwar in Richtung auf den Leistungslaser 1 zu. Dabei wird der nach dem dritten Ablenkspiegel 6 verlaufende Laserstrahl 4 mit Hilfe einer Fokussierungsoptik, im vorliegenden Fall mittels einer Linse 7, so fokussiert, daß sein Brennpunkt auf der äußeren Mantelfläche eines Hohlzylinders 8 zu liegen kommt. Die Mantelfläche kann z. B. mit einem organischen Lack beschichtet sein. Der Hohlzylinder 8 besteht aus einem sehr dünnen und gleichmäßig perforierten Metallgitter und ist zwischen zwei drehbar gelagerten Kegelstummeln 9 und 10 gehalten. Der Kegelstummel 9 wird durch einen nicht dargestellten Antrieb in einem Spindelstock 11 in Drehung versetzt. Auch der Kegelstummel 10 ist drehbar gelagert, und zwar in einem Reitstock 12. Der Reitstock 12 kann auf Führungsbahnen 13 in Richtung einer Hohlzylinderachse 14 gegen den Hohlzylinder 8 gepreßt werden, wobei er dann den Hohlzylinder 8 gegen den Kegelstummel 9 drückt. Durch den so herbeigeführten Reibungsschluß werden der Hohlzylinder 8 und der Kegelstummel 10 von der Drehbewegung des Kegelstummels 9 mitgenommen. Wegen des äußerst geringen Reibungswiderstands, welcher der im Reitstock 12 kugelgelagerte Kegelstummel 10 zu überwinden hat, und auch infolge der sehr konstanten Antriebsdrehzahl des Kegelstummels 9, genügen sehr geringe axiale Spannkräfte zwischen dem Hohlzylinder 8 und den Kegelstummeln 9 und 10, um den Hohlzylinder 8 schlupffrei und daher mit der Drehzahl des Kegelstummels 9 anzutreiben.

Der dritte Ablenkspiegel 6 und die Linse 7 sind auf einem in Richtung der Hohlzylinderachse 14 bewegbaren Schlitten 15 montiert. Genauer gesagt trägt der Schlitten 15 einen Querschlitten 16, auf dem der dritte Ablenkspiegel 6 und die Linse 7 angeordnet sind, und durch den eine genaue radiale Justierung des durch die Linse 7 erzeugten Brennpunkts auf der Oberfläche des Hohlzylinders 8 möglich ist. Wird der Schlitten 15 mit Hilfe einer Spindel 17 entlang von Führungsstangen 18 in Richtung der Hohlzylinderachse 14 bewegt, und wird dabei gleichzeitig der Hohlzylinder 8 gedreht, so beschreibt der Brennpunkt der Linse 7 bzw. der im Brennpunkt fokussierte Laserstrahl 4 eine Schraubenlinie auf der Oberfläche des Hohlzylinders 8. Der Antrieb der Spindel 17 erfolgt durch einen Schrittmotor 19. Der Leistungslaser 1 wird gepulst. Für die Steuerung der vom Leistungslaser 1 abgegebenen Laserpulse als auch für die Schrittsteuerung des Schrittmotors 19 ist es erforderlich, zu jedem Zeitpunkt die genaue Drehlage des Hohlzylinders 8 zu kennen. Aus diesem Grunde ist mit der Welle des Kegelstummels 9 ein Drehlagendecoder 20 verbunden, der während einer Umdrehung des Hohlzylinders 8 mehrere tausend Impulse abgibt.

Beim Antrieb des sehr dünnwandigen und perforierten Hohlzylinders 8, dessen Wanddicke weniger als einen Millimeter betragen kann, und der Durchmesser von z. B. zehn bis dreißig Zentimeter aufweisen kann, treten Schwingungserscheinungen auf, die sowohl auf die Biegeeigenfrequenzen bzw. auf die kritischen Drehzahlen des Hohlzylinders 8 als auch auf Membranschwingungen zurückzuführen sind. Diese Schwingungserscheinungen sind umso stärker, je näher die Drehzahl des Hohlzylinders 8 in der Nähe einer Eigenfrequenz liegt. Da der Leistungslaser 1 mit hoher Arbeitsfrequenz betrieben wird, muß die Drehzahl für den Hohlzylinder 8 relativ hoch gewählt werden. Aufgrund der großen Länge des Hohlzylinders 8, die mehrere Meter betragen kann, liegt dabei jedoch die erste eigenkritische Drehzahl sehr niedrig, so daß es zu einem recht unruhigen Lauf des Hohlzylinders 8 kommt, wenn keine zusätzlichen Maßnahmen getroffen werden.

Um die Biegeeigenfrequenz auf einen höheren Wert anzuheben, und um die Steifigkeit des Zylindermantels zu verbessern, kommt bei der vorliegenden Erfindung eine Stützlagerung 21 zum Einsatz, die den Hohlzylinder 8 an mehreren in seiner Umfangsrichtung liegenden Positionen beaufschlagt. Die Stützlagerung 21 ist fest mit dem Schlitten 15 verbunden und wird dann, wenn der Schlitten 15 entlang der Führungsstangen 18 geführt wird, wenn er sich also parallel zur Hohlzylinderachse 14 bewegt, gemeinsam mit dem durch die Linse 7 fokussierten Laserstrahl 4 in Längsrichtung des Hohlzylinders 8 verschoben.

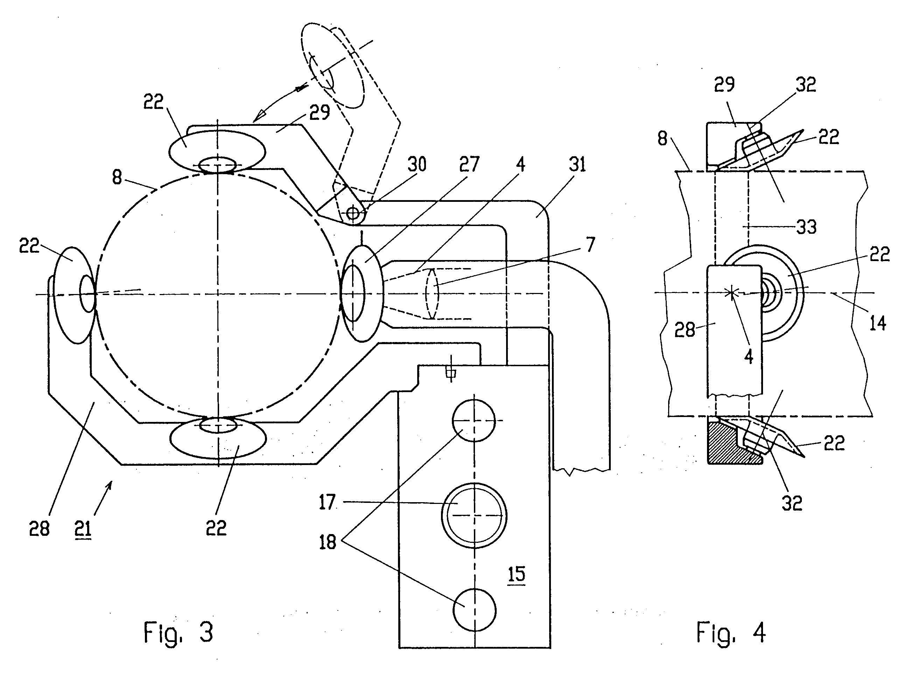

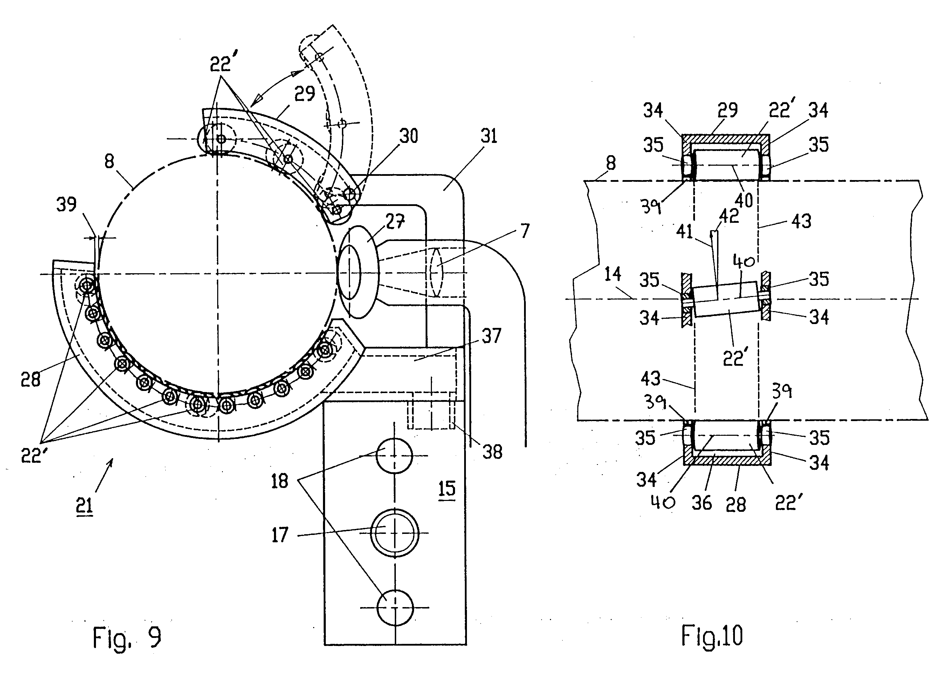

Die Stützlagerung 21 kann z. B. eine Mehrzahl von Rotationskörpern 22 enthalten, die in einem senkrecht zur Hohlzylinderachse 14 liegenden ebenen Bereich 33,43 in Fig. 4 und 10 in Umfangsrichtung des Hohlzylinders 8 im Abstand voneinander angeordnet sind. In exakt diesem ebenen Bereich verläuft auch der fokussierte Laserstrahl 4 radial auf den Hohlzylinder 8 zu, wobei in Fig. 1 der Laserstrahl von der Bedienungsseite der Vorrichtung her auf den Hohlzylinder 8 geführt wird. Die Bedienungsseite ist hier diejenige Seite, an der sich der Schlitten 15 befindet, während an der Rückseite der Vorrichtung der bereits erwähnte Leistungslaser 1 steht. Der zwischen dem dritten Ablenkspiegel 6 und dem Hohlzylinder 8 verlaufende fokussierte Laserstrahl 4 läuft praktisch radial durch die Stützlagerung 21 hindurch, und zwar in einem Raum zwischen zwei Rotationskörpern. Dieser Raum bildet die sogenannte Aussparung der Stützlagerung 21.

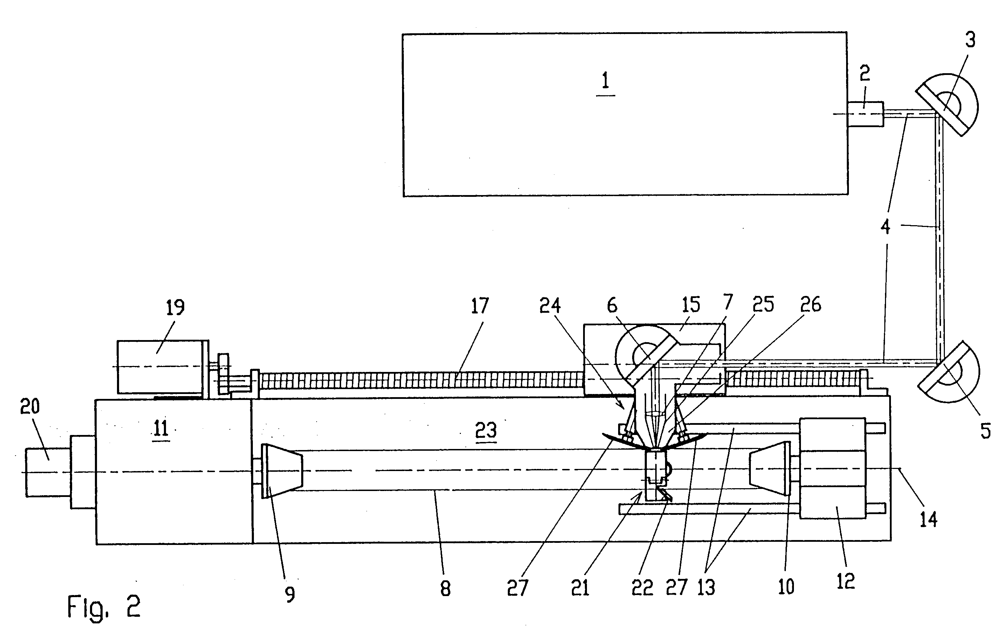

Die Fig. 2 zeigt eine entsprechende Vorrichtung, bei der sich jedoch der Schlitten 15 zur Axialführung des Laserstrahls 4 an der Rückseite befindet. Hier trifft der fokussierte Laserstrahl von der Rückseite der Vorrichtung auf den Hohlzylinder 8 auf, nachdem er die Linse 7 durchlaufen hat. Die genannte Aussparung der Stützlagerung 21 weist also bei der in Fig. 2 gezeigten Vorrichtung von der Bedienungsseite weg. Dies hat den Vorteil, daß sich die Vorrichtung leichter mit einem Hohlzylinder 8 aufrüsten läßt, dajetzt der Schlitten 15 und die auf ihm montierte Optik 6,7 nicht mehr im Wege sind.

Der Spindelstock 11 und der Reitstock 12 sind an einem Maschinenbett 23 befestigt, an welchem seitlich auch die Spindel 17 und die Führungsstangen 18 montiert sind. Entsprechend der Fig. 2 ist die zur Fokussierung des Laserstrahls 4 vorgesehene Linse 7 ferner in einem Gravurkopf 24 angeordnet. Innerhalb einer sich zum Hohlzylinder 8 hin verjüngenden Innendüse 25, In der die Linse fest positioniert ist, herrscht ein etwas höherer Druck als der Umgebungsdruck, wobei der höhere Druck durch Einleitung von Stickstoff aufrechterhalten wird. Die Verjüngung der Innendüse 25 entspricht dem Verlauf des fokussierten Laserstrahls 4 hinter der Linse 7. Der Stickstoff tritt an der engsten Stelle der Innendüse 25 aus dieser aus, also im Bereich der Düsenspitze, und verhindert so das Eindringen von Schmutzteilchen in die Innendüse 25, so daß eine im Laufe der Zeit auftretende Verschmutzung der Linse 7 vermieden wird. Die Innendüse 25 ist von einer größeren Saugdüse 26 konzentrisch umgeben, wobei die Saugdüse 26 einerseits den abdampfenden und sofort wieder kondensierenden Lack absaugt und andererseits die Wandung des Hohlzylinders 8 ansaugt, wodurch die Wandung gezwungen wird, sich dauernd an einen Umfangsrand kegelförmiger Stützscheiben 27 anzulegen, die seitlich an der Saugdüse 26 positioniert sind. Die aus der Innendüse 25, der Saugdüse 26 und den Stützscheiben 27 bestehende Einheit wird in Axialrichtung 14 des Hohlzylinders 8 bewegt, wobei permanent eine Abstützung der Umfangswand des Hohlzylinders 8 durch die Stützscheiben 27 erfolgt, und zwar in den Seitenbereichen der Stützlagerung 21, wodurch eine noch bessere Schwingungsdämpfung erzielt wird. Die Stützscheiben 27 sind drehbar am Gravurkopf 24 gelagert, wobei ihre Drehachsen relativ zur optischen Achse der Linse 7 in Richtung auf den Hohlzylinder 8 zu nach außen geneigt sind. Sie sind kegelstumpfförmig ausgebildet, wobei die Umfangsfläche des Hohlzylinders 8 auf der Kegelmantelfläche der Stützscheiben 27 abläuft.

Die in der Stützlagerung 21 vorhandene Aussparung ist dabei so groß gewählt, daß genügend Platz für die Stützscheiben 27 vorhanden ist, die in Axialrichtung des Hohlzylinders 8 unmittelbar benachbart zum Brennpunkt des Laserstrahls 4 die Oberfläche des Hohlzylinders 8 beaufschlagen.

Die Fig. 3 zeigt eine Stirnansicht einer Stützlagerung nach der Erfindung, gesehen in Axialrichtung des Hohlzylinders 8, während die Fig. 4 eine Seitenansicht dieser Stützlagerung ist, und zwar gesehen von links in Fig. 3.

Die Stützlagerung 21 nach den Fig. 3 und 4 weist als Rotationskörper Konus- bzw. Kegelrollen 22 auf, und zwar eine obere, eine untere und eine seitliche, die zur Vorderseite der Vorrichtung weist. Der Bereich, in dem sich die Mantelfläche dieser seitlichen Konusrolle 22 und der Mantel des Hohlzylinders 8 berühren, liegt dem Auftreffpunkt des Laserstrahls 4, der durch die Linse 7 fokussiert worden ist, radial gegenüber. In Axialrichtung des Hohlzylinders 8 seitlich zu diesem Auftreffpunkt des fokussierten Laserstrahls 4 befinden sich die Stützscheiben 27.

Die in Fig. 3 linke und untere Konusrolle 22 sind an einem unteren Lagerbügel 28 drehbar gelagert, der seinerseits fest mit dem Schlitten 15 verbunden ist. Zur drehbaren Lagerung der oberen Konusrolle 22 dient ein Lagerbügel 29, der über ein Gelenk 30 an einem Arm 31 befestigt ist, der ebenfalls mit dem Schlitten 15 fest verbunden ist. Der obere Lagerbügel 29 kann in Richtung der Rückseite der Vorrichtung weggeklappt werden, wie durch die gestrichelten Linien dargestellt ist, um somit den Hohlzylinder 8 in die Stützlagerung 21 einlegen oder aus dieser herausnehmen zu können. Mit anderen Worten liegt die in Fig. 3 links gezeigte Konusrolle 22 an der Bedienungsseite der Vorrichtung, während der Schlitten 15 an der Rückseite der Vorrichtung liegt, von der aus auch der Hohlzylinder 8 bestrahlt wird.

Wird der Schlitten 15 über die Spindel 17 entlang der Führungsstangen 18 transportiert, so bewegen sich der untere Lagerbügel 28 und der obere Lagerbügel 29 mit dem Schlitten 15 mit und in Axialrichtung 14 des Hohlzylinders 8. Gleichzeitig werden auch die Stützscheiben 27 mitbewegt, da sie am Gravurkopf 24 befestigt sind, der seinerseits auf dem Schlitten 15 angeordnet ist.

Entsprechend der Fig. 4 liegen die Rotationsachsen 32 der Konusrollen 22 in Ebenen, in denen auch die Zentralachse 14 des Hohlzylinders 8 liegt. Die Mantelfläche der Konusrollen 22 liegt im Berührungsbereich mit dem Hohlzylinder 8 parallel zu dessen Oberfläche, wobei die den Hohlzylinder 8 berührenden Abschnitte der Mantelflächen der Konusrollen ein streifenförmiges Gebiet 33 definieren, das sich entlang des Umfangs des Hohlzylinders 8 erstreckt. Genau in diesem streifenförmigen Gebiet 33 trifft auch der Laserstrahl 4 auf den Hohlzylinder 8 auf, und zwar in Fig. 4 von hinten kommend, also von der Papierrückseite. Die Gravur des Hohlzylinders 8 mit Hilfe des Laserstrahls 4 erfolgt also immer innerhalb des streifenförmigen Gebiets 33, welches am stärksten schwingungsgedämpft ist, so daß sich ein einwandfreies Musterbild erzeugen läßt.

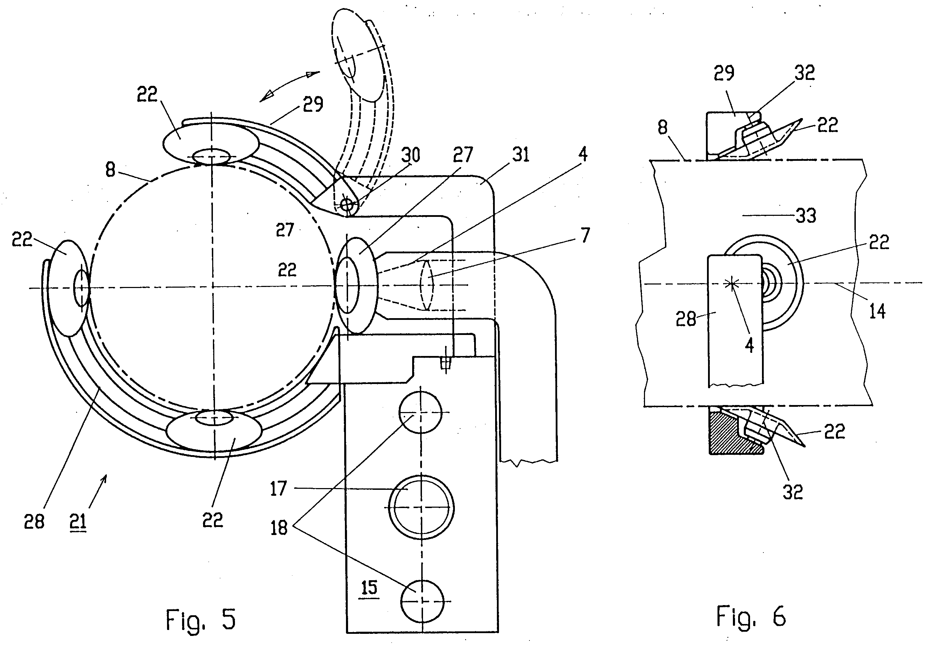

Die Fig. 5 und 6 zeigen eine ähnliche Stützlagerung 21 wie die Fig. 3 und 4, mit dem Unterschied, daß jetzt der untere Lagerbügel 28 und der obere Lagerbügel 29 nicht mehr polygonartig sondern teilkreisartig ausgeführt sind. Ansonsten sind gleiche Teile wie in den Fig. 3 und 4 mit den gleichen Bezugszeichen versehen und werden nicht nochmals beschrieben.

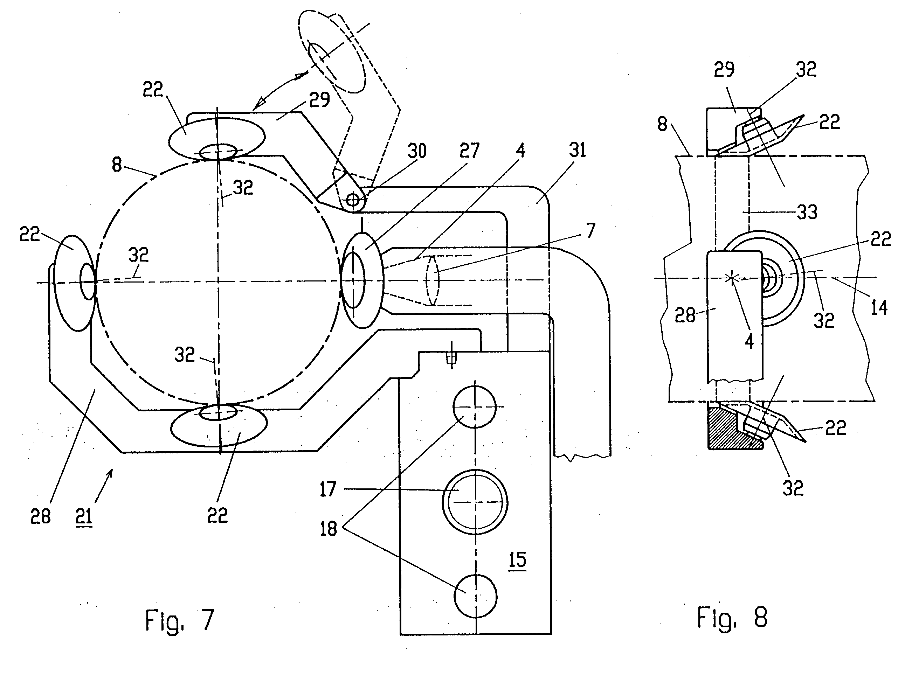

Eine weitere und sehr vorteilhafte Ausgestaltung der Erfindung ist in den Fig. 7 und 8 dargestellt, die eine Stützlagerung 21 zeigen, die im wesentlichen wie diejenige nach den Fig. 3 und 4 aufgebaut ist. Gleiche Teile wie in den Fig. 3 und 4 sind daher mit den gleichen Bezugszeichen versehen und werden nicht nochmals beschrieben. Der Unterschied zwischen beiden Stützlagerungen besteht darin, daß gemäß den Fig. 7 und 8 die Rotationsachsen 32 der Konusrollen 22 so geneigt sind, daß sie quer zu einer Ebene verlaufen, in der die Zentralachse 14 des Hohlzylinders 8 liegt. Nach den Fig. 3 und 4 sind die Rotationsachsen 32 zwar auch gegenüber der Zentralachse 14 geneigt,jedoch liegen sie in derselben Ebene, in der auch die Zentralachse 14 liegt. Dies ist bei den Fig. 7 und 8 anders. Der Grund besteht darin, daß mit Hilfe der Konusrollen 22 jetzt auch in Axialrichtung 14 des Hohlzylinders 8 wirkende Kräfte in dessen Oberfläche übertragen werden sollen, die zu einem noch stabileren und ruhigeren Lauf des Hohlzylinders 8 in der Stützlagerung 21 führen. Neben diesen in Axialrichtung wirkenden Kräften, die infolge des Reibschlusses zwischen dem Hohlzylinder 8 und den Konusrollen 22 generiert werden, treten natürlich weiterhin die in Tangentialrichtung wirkenden Kräfte auf.

Um hier für einen noch besseren Reibschluß zwischen den Konusrollen 22 und dem Hohlzylinder 8 zu sorgen, kann die Kontur der Mantelfläche der Konusrollen 22 auch konkav ausgeführt sein, so daß sich die Konusrollen 22 mit ihrer Mantelfläche zu einem Teil um den Hohlzylinder 8 herumlegen bzw. sich an diesen anschmiegen.

Ein viertes Ausführungsbeispiel der Erfindung wird nachfolgend unter Bezugnahme auf die Fig. 9 und 10 näher beschrieben.

Die Stützlagerung 21 nach den Fig. 9 und 10 weist wiederum zwei teilkreisartig ausgebildete Lagerbügel 28 und 29 auf, die am Schlitten 15 fest montiert sind und mit diesem in Axialrichtung 14 des Hohlzylinders 8 mitbewegt werden. Dabei ist der obere Lagerbügel 29 um ein Gelenk 30 von der Vorderseite der Vorrichtung nach hinten wegklappbar, und zwar in die mit gestrichelten Linien dargestellte Position, wie bereits im Zusammenhang mit den zuvor erwähnten Ausführungsbeispielen beschrieben.

Der untere Lagerbügel 28 und der obere Lagerbügel 29 sind als Hohlträger ausgebildet, die im Abstand voneinander liegende Wangen 34 aufweisen, welche bis nahe an die Oberfläche des Hohlzylinders 8 herangeführt sind. Im oberen Lagerbügel 29 sind als Rotationskörper drei Zylinderrollen 22' angeordnet, deren Zylinderachsen in Lagern 35 gelagert sind, welche sich in den Wangen 34 befinden. Der obere Lagerbügel 29 kann sich ausgehend von den Stützscheiben 27 bis zum höchsten Punkt des Hohlzylinders 8 erstrecken. Die Zylinderrollen 22' stehen dabei etwas über die Wangen 34 hervor, so daß sich der Hohlzylinder 8 auf den Zylinderrollen 22' abrollen kann.

Der untere Lagerbügel 28 nimmt eine größere Anzahl von Zylinderrollen 22' auf, deren Zylinderachsen ebenfalls über Lager 35 in den seitlichen Wangen 34 gelagert sind. Die Wangen 34 dieses unteren Lagerbügels 28 dienen nicht nur zur Aufnahme der Zylinderrollen 22' sondern formen auch eine unter leichtem Unterdruck stehende Saugrinne 36. Der untere Lagerbügel 28 ist mit einem Saugkanal 37 verbunden, der einen Flansch 38 aufweist, welcher mit einer nicht dargestellten Ansaugleitung verbunden werden kann, um zur Erzeugung des genannten Unterdrucks Luft aus dem unteren Lagerbügel 28 abzusaugen. Ein zwischen den Wangen 34 und dem Hohlzylinder 8 liegender Spalt 39 ist dabei so eng bemessen, daß der in der Saugrinne 36 sich einstellende Unterdruck ausreicht, um den Hohlzylinder 8 mit genügend großer Kraft an die Zylinderrollen 22' des unteren Hohlträgers 28 zu pressen. Dieser umgibt den Hohlzylinder 8 in seinem unteren Teil um etwas weniger als 180 Grad.

Die Zylinderrollen 22' können in den Lagerbügeln 28 und 29 so angeordnet sein, daß die Zylinderachsen der Zylinderrollen 22' parallel zur Zylinderachse 14 des Hohlzylinders 8 liegen. Es ist aber auch möglich, die Zylinderachsen 40 der Zylinderrollen 22' so zu kippen, daß sie gegenüber einer Ebene, in der die Zylinderachse 14 verläuft, geneigt sind. Dies läßt sich besonders gut an der mittleren Zylinderrolle 22' in Fig. 10 erkennen. Die Umfangsgeschwindigkeit 41 der Zylinderrollen 22' weist somit zusätzliche eine Komponente 42 auf, die in Richtung der Zylinderachse 14 des Hohlzylinders 8 liegt.

Die Zylinderrollen 22' können gegebenenfalls eine leicht konkave Kontur der Mantelerzeugenden aufweisen. Diese konkave Mantelkontur der Zylinderrollen 22' bewirkt zusammen mit der Schrägstellung dieser Zylinderrollen 22', daß sich der Hohlzylinder 8 mit einer noch genaueren Hohlzylindermantelkontur und ohne Verletzung seiner auf ihn aufgebrachten Lackaußenhaut auf den Zylinderrollen 22' abwälzen kann.

Erfindungsgemäß trifft auch hier der Laserstrahl 4 in einem Bereich 43 auf den Hohlzylinder 8 auf, der von den Zylinderrollen 22' unmittelbar gedämpft wird. Der Laserstrahl 4 verläuft also immer im Zentralbereich der Stützlagerung 21, und zwar in Axialrichtung gesehen vorzugsweise in der Mitte der Stützlagerung 21. Dabei tritt er durch den Bereich zwischen zwei benachbarten Zylinderrollen 22' hindurch, wobei die eine zum oberen Lagerbügel 29 und die andere zum unteren Lagerbügel 28 gehört.

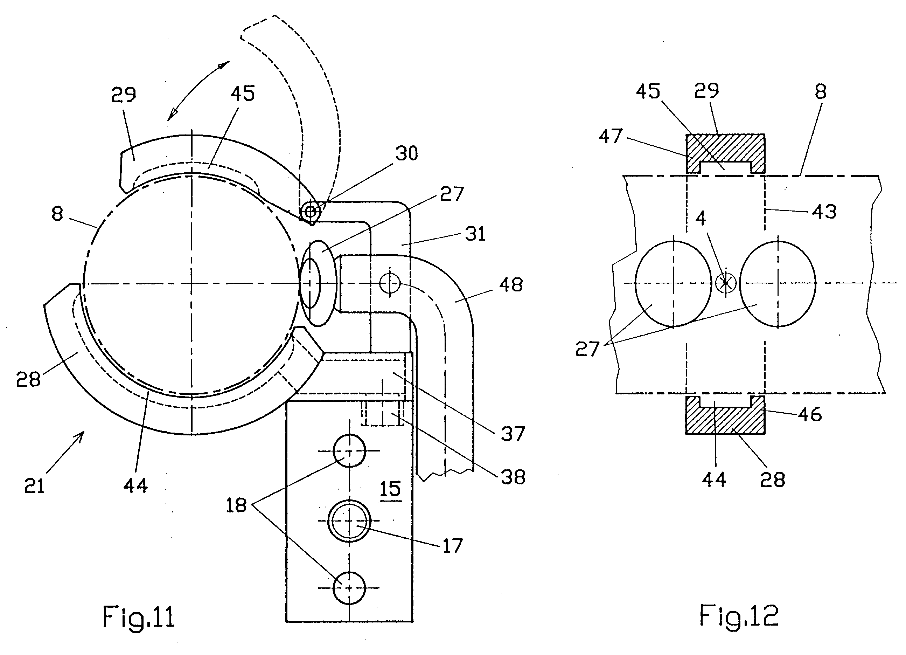

In den Fig. 11 und 12 ist ein fünftes Ausführungsbeispiel der Erfindung dargestellt. Gleiche Teile wie in den Fig. 9 und 10 sind mit den gleichen Bezugszeichen versehen.

Die Stützlagerung nach dem fünften Ausführungsbeispiel unterscheidet sich von derjenigen nach dem vierten Ausführungsbeispiel dadurch, daß in den Lagerbügeln 28 und 29 keine Rotationskörper angeordnet sind. Die Lagerbügel 28 und 29 weisen vielmehr nur die in ihrer Längsrichtung bzw. in Umfangsrichtung des Hohlzylinders 8 verlaufenden Kanäle 44 und 45 auf, die als Saugkanäle verwendbar sind. Gemäß den Fig. 11 und 12 ist lediglich der untere Kanal 44 über einen Saugkanal 37 und einen Flansch 38 mit einer nicht dargestellten Ansaugleitung verbunden, über die ein Unterdruck im Kanal 44 erzeugt werden kann. Die Seitenwände des Kanals 44 und auch die des Kanals 45, die auch als Wangen bezeichnet werden können, sind bis nahe an die Oberfläche des Hohlzylinders 8 herangeführt, um einen schmalen Spalt zwischen ihren Stirnseiten und dem Hohlzylinder 8 zu bilden. Hierdurch läßt sich ein hinreichend guter Unterdruck im Kanal 44 erzielen, auch bei nur geringer Saugleistung einer mit der Saugleitung verbundenen Pumpe. Der Spalt kann einige zehntel Millimeter groß sein.

Ansonsten ist auch hier der untere Lagerbügel 28, der den Hohlzylinder 8 fast halbkreisförmig umgibt, fest am Schlitten 15 montiert, ebenso wie der obere Lagerbügel 29 über den Arm 31. Der obere Lagerbügel 29 ist um das Gelenk 30 verschwenkbar, um den Hohlzylinder 8 in die Stützlagerung 21 einsetzen bzw. aus dieser herausnehmen zu können. Eine Halteeinrichtung 48 dient unter anderem zur Positionierung der Stützscheiben 27.

Wie insbesondere Fig. 12 zeigt, trifft auch hier der Laserstrahl 4, nachdem er den Bereich zwischen den Stützscheiben 27 durchlaufen hat, radial auf die Oberfläche des Hohlzylinders 8 in einem Bereich 43 auf, der durch die axiale Breite der Stützlagerung 21 bzw. der Lagerbügel 28, 29 definiert wird. Die genannte Aussparung liegt in Fig. 11 zwischen den jeweils rechten Enden von unterem und oberem Lagerbügel 28 bzw. 29.

Die Ausführungsbeispiele beziehen sich darauf, daß der Laserstrahl zunächst parallel zum Hohlzylinder verläuft, bevor ersterer um 90 Grad abgelenkt wird, um radial auf den Hohlzylinder aufzutreffen. Der Laserstrahl kann aber auch in anderer Weise an den Hohlzylinder herangeführt werden, beispielsweise über Lichtwellenleiter, so daß es auf die zum Hohlzylinder parallele Strahlungsrichtung nicht ankommt. Wichtig ist nur, daß der in Radialrichtung des Hohlzylinders verlaufende Abschnitt des Laserstrahls in Längs- bzw. Axialrichtung des Hohlzylinders verschiebbar ist.

## Patentansprüche

1. Vorrichtung zum Bearbeiten der Oberfläche eines dünnwandigen und zur Herstellung einer Siebdruckschablone dienenden Hohlzylinders (8) mit Hilfe eines wenigstens annähernd radial auf den Hohlzylinder (8) auftreffenden und in dessen Längsrichtung bewegbaren Laserstrahls (4), sowie mit einer mit dem Laserstrahl (4) mitbewegbaren Stützlagerung (21), die den Hohlzylinder (8) zu seiner Abstützung in Umfangsrichtung umgibt, in dieser Richtung stationär angeordnet ist und eine Aussparung aufweist, **dadurch gekennzeichnet,** daß die Stützlagerung (21) relativ zum Laserstrahl (4) so positioniert ist, daß dieser durch die Aussparung hindurch auf den Hohlzylinder (8) auftrifft.

2. Vorrichtung nach Anspruch 1, **dadurch gekennzeichnet,** daß die Stützlagerung (21) den Hohlzylinder (21) ring- oder teilringartig umgibt.

3. Vorrichtung nach Anspruch 2, **dadurch gekennzeichnet,** daß die Stützlagerung (21) aus zueinander verschwenkbaren Lagerbügeln (28,29) besteht.

4. Vorrichtung nach Anspruch 1,2 oder 3, **dadurch gekennzeichnet**, daß die Stützlagerung (21) wenigstens zum Teil hohlträgerartig und mit zum Hohlzylinder (8) offener Seite ausgebildet sowie mit einer Saugeinrichtung (37, 38) verbunden ist.

5. Vorrichtung nach Anspruch 4, **dadurch gekennzeichnet**, daß Wangen (46,47) der Stützlagerung (21) zur Bildung eines schmalen Spalts zwischen ihren Stirnseiten und dem Hohlzylinder (8) bis nahe an dessen Mantelfläche herangeführt sind.

6. Vorrichtung nach einem der Ansprüche 1 bis 5, **dadurch gekennzeichnet,** daß
- die Stützlagerung (21) eine Mehrzahl von Rotationskörpern (22,22') aufweist, an denen sich die Oberfläche des Hohlzylinders (8) abrollt, und
- der Laserstrahl (4) im Bereich zwischen den Rotationskörpern (22,22') in Richtung zum Hohlzylinder (8) verläuft.

7. Vorrichtung nach Anspruch 6, **dadurch gekennzeichnet**, daß die Rotationskörper (22,22') so ausgerichtet sind, daß sie in den Hohlzylinder (8) eine Kraftkomponente sowohl in dessen Tangentialrichtung als auch eine Kraftkomponente in dessen Axialrichtung übertragen.

8. Vorrichtung nach Anspruch 6 oder 7, **dadurch gekennzeichnet,** daß die Rotationskörper Konusrollen (22) sind.

9. Vorrichtung nach Anspruch 6 oder 7, **dadurch gekennzeichnet,** daß die Rotationskörper Zylinderrollen (22') sind.

10. Vorrichtung nach Anspruch 8 oder 9, **dadurch gekennzeichnet**, daß die Rotationskörper (22, 22') eine konkave Kontur aufweisen.

## Claims

1. Device for machining the surface of a thin-walled hollow cylinder (8), serving for producing a screen printing stencil, with the aid of a laser beam (4) which impinges at least approximately radially on the hollow cylinder (8) and can be moved in its longitudinal direction, and also with a supporting bearing (21) which can be moved along with the laser beam (4), surrounds the hollow cylinder (8) for supporting the latter in the circumferential direction, is arranged stationarily in this direction and exhibits an opening, **characterised in** that the supporting bearing (21) is positioned in relation to the laser beam (4) in such a way that the latter impinges on the hollow cylinder (8) through the opening.

2. Device according to Claim 1, **characterised in** that the supporting bearing (21) surrounds the hollow cylinder (21) annularly or part-annularly.

3. Device according to Claim 2, **characterised in** that the supporting bearing (21) consists of bearing bows (28, 29) which can be pivoted with respect to one another.

4. Device according to Claim 1, 2 or 3, **characterised in** that the supporting bearing (21) is at least partially constructed in the manner of a hollow frame and with a side open towards the hollow cylinder (8) and is connected to a suction device (37, 38).

5. Device according to Claim 4, **characterised in** that cheeks (46, 47) of the supporting bearing (21) are brought close to the surface of the hollow cylinder (8) to form a small gap between their end faces and the hollow cylinder (8).

6. Device according to one of Claims 1 to 5, **characterised in** that
- the supporting bearing (21) exhibits a plurality of bodies of rotation (22, 22') on which the surface of the hollow cylinder (8) rolls off, and that
- the laser beam (4) extends in the direction of the hollow cylinder (8) in the area between the bodies of rotation (22, 22').

7. Device according to Claim 6, **characterised in** that the bodies of rotation (22, 22') are aligned in such a manner that they transfer a force component both in its tangential direction and a force component in its axial direction into the hollow cylinder (8).

8. Device according to Claim 6 or 7, **characterised in** that the bodies of rotation are conical rollers (22).

9. Device according to Claim 6 or 7, **characterised in** that the bodies of rotation are cylindrical rollers (22').

10. Device according to Claim 8 or 9, **characterised in** that the bodies of rotation (22, 22') exhibit a concave contour.

## Revendications

1. Dispositif d'usinage de la surface d'un cylindre creux (8) à paroi mince et servant à la fabrication d'un gabarit ou écran de sérigraphie, à l'aide d'un rayon laser (4) arrivant au moins de façon sensiblement radiale sur le cylindre creux (8) et susceptible de se déplacer dans sa direction longitudinale, ainsi qu'à l'aide d'un palier d'appui (21), susceptible de se déplacer avec le rayon laser (4) et qui entoure dans la direction périphérique le cylindre creux (8) pour assurer son appui, disposé fixe dans cette direction et qui comporte un évidement, caractérisé en ce que le palier d'appui (21) est positionné par rapport au rayon laser (4) de telle manière que ce dernier arrive sur le cylindre creux (8) en passant à travers l'évidement.

2. Dispositif selon la revendication 1, caractérisé en ce que le palier d'appui (21) entoure le cylindre creux (21) à la façon d'un anneau ou d'un anneau partiel.

3. Dispositif selon la revendication 2, caractérisé en ce que le palier d'appui (21) est composé d'étriers de palier (28, 29) susceptibles de pivoter les uns par rapport aux autres.

4. Dispositif selon la revendication 1, 2 ou 3, caractérisé en ce que le palier d'appui (21) est réalisé au moins en partie à la façon d'un support creux et avec une face ouverte par rapport au cylindre creux (8) et est relié à un dispositif d'aspiration (37, 38).

5. Dispositif selon la revendication 4, caractérisé en ce que des joues (46, 47) du palier d'appui (21) sont amenées jusqu'à proximité de la surface d'enveloppe du cylindre creux, pour constituer un intervalle étroit entre leurs faces frontales et le cylindre creux (8).

6. Dispositif selon l'une des revendications 1 à 5, caractérisé en ce que
- le palier d'appui (21) présente une pluralité de corps de rotation (22, 22') sur lesquels roule la surface du cylindre creux (8), et
- le rayon laser (4) s'étend dans la zone située entre les corps de rotation (22, 22'), en direction du cylindre creux (8).

7. Dispositif selon la revendication 6, caractérisé en ce que les corps de rotation (22, 22') sont orientés de telle façon qu'ils transmettent dans le cylindre creux (8) une composante de force, orientée tant dans sa direction tangentielle qu'également une composante de force orientée dans sa direction axiale.

8. Dispositif selon la revendication 6 ou 7, caractérisé en ce que les corps de rotation (22, 22') sont des galets coniques (22).

9. Dispositif selon la revendication 6 ou 7, caractérisé en ce que les corps de rotation (22, 22') sont des galets cylindriques (22').

10. Dispositif selon la revendication 8 ou 9, caractérisé en ce que les corps de rotation (22, 22') présentent un contour concave.
